# EUROPEAN PATENT SPECIFICATION

(11) **EP 4 143 473 B1**
(45) Date of publication and mention of the grant of the patent: **10.12.2025**
(21) Application number: 21796987.2
(22) Date of filing: 27.04.2021
(51) Int. Cl.: F16L 5/08, F16L 5/02, F16L 5/04, F16L 5/10

(54) **DUCTWORK AND METHOD FOR INSTALLING SUCH A DUCTWORK AND USE OF SUCH DUCTWORK AND METHOD**
LEITUNGSSYSTEM UND VERFAHREN ZUR INSTALLATION SOLCH EINES LEITUNGSSYSTEMS UND VERWENDUNG SOLCH EINES LEITUNGSSYSTEMS UND VERFAHREN
SYSTÈME DE GAINE ET PROCÉDÉ POUR INSTALLER UN TEL SYSTÈME DE GAINE ET UTILISATION D'UN TEL SYSTÈME DE GAINE ET PROCÉDÉ

(30) Priority: 27.04.2020 DK PA202070267; 03.07.2020 DK PA202070458
(43) Date of publication of application: 08.03.2023
(73) Proprietor: Blücher Metal A/S, 7480 Vildbjerg (DK)
(72) Inventor: RASMUSSEN, Michael Kyhn, 7884 Fur (DK)
(74) Representative: Patrade A/S
(86) International application number: PCT/DK2021/050130
(87) International publication number: WO 2021/219184

(56) References cited:
- EP-A2- 2 635 831
- WO-A1-2019/057855
- DE-U1- 202005 007 846
- DE-U1- 29 709 983
- US-A1- 2011 114 651

## Description

### Field of the Invention

The present invention relates to a ductwork for leading at least one pipe through a circular opening in a partitioning wall as well as a method for installing such a ductwork in a partitioning wall and the use of such ductwork and such method.

The ductwork includes:
- a flange member, where said flange member has a pipe section with an inner diameter, wherein connected to the pipe section adjacent one end of said pipe is arranged a flange, said flange extending radially away from said pipe section in a plane substantially orthogonal to a longitudinal direction of the pipe section, and where one or more apertures are provided through said flange;
- a gasket dimensioned to be positioned on said flange, where a first aperture is arranged centrally in said gasket, said aperture having a diameter larger than the inner diameter in the pipe section, and in use arranged on the flange such that the aperture is superposed the pipe section, and where further one or more second apertures are provided through the gasket, such that in use the one or more second apertures may be aligned/superposed with the one or more apertures in the flange;
- a counter plate, which in use is to be positioned on the opposite side of the partitioning as to the flange member and the gasket, where the counter plate has a central aperture, and where the counter plate in a plane orthogonal to the aperture, has a non-circular cross-section, having a minor dimension across the counter plate and a major dimension across the counter plate in a direction different from the minor dimension, and where one or more studs extends from a first surface of the counter plate, such that the one or more studs may be inserted through the one or more second apertures in the gasket and the one or more apertures in the flange of the flange member.

### Background of the Invention

An example of a ductwork of this type is known from the same applicant's prior patent EP 2,635,831 B1 in which a ductwork is described for leading a pipe through a hole in a partitioning. The ductwork comprises a flange and a number of connecting arrangements such that the flange may be arranged in the opening in the partitioning. The connecting arrangement includes a force transmission means which cooperate with the flange by means of a bolt connection such that the force transmission means may be pivoted from a position where they are able to pass through the opening in the partitioning wall to a position where they are extending radially from the centre of the ductwork on a rear side of the partitioning wall. Thereafter by tightening the bolts it is possible to fasten the ductwork to the hole in the partitioning. This system although being easy to operate and very reliable does not facilitate the use of a tightening means, for example in the shape of a gasket or other joint materials and furthermore relies on three substantially separate connecting arrangements in order to achieve a firm mounting on the partitioning wall.

WO 2019/057855 A1 disclose a ductwork of the type is of the type defined by way of introduction and as defined in the preamble of claim 1. There is no disclosure of the use of an intermediate plate having apertures arranged such that the one or more studs in the counter plate may pass through one or more apertures in the intermediate plate.

US 2011/114651 A1 disclose a torque arm restraint which can be incorporated into a fitting or mounted onto an existing fitting to counteract the torque placed on the fitting and adjacent areas of a tank wall in which the fitting is mounted. The disclosure exemplifies counteracting the torque on a fitting comprising an inside flange with a shoulder having threaded studs, gaskets and arranged on opposite sides of the tank wall, wherein the gaskets have holes to receive the studs, and an outside flange comprising holes to receive the studs. There is no disclosure of the use of an intermediate plate having apertures arranged such that the one or more studs in the counter plate may pass through one or more apertures in the intermediate plate arranged on the opposite side of the partition wall than the counter plate.

### Object of the invention

The present invention aims at alleviating these drawbacks and providing further advantages.

### Description of the invention

Consequently, the present invention provides a ductwork for leading at least one pipe through a circular opening in a partitioning wall, the ductwork being defined in claim 1.

With this construction of a ductwork it is possible to create a very tight and firm fit around the opening in the partitioning and at the same time by relatively simple means a few separate parts, assure that the ductwork is mounted in the correct position in the correct manner. The flange member does include a pipe section and foresee that the pipe which is desired to pass through the partitioning wall is safely guided through the wall and received in a proper manner in the pipe section already arranged in the flange. The combination of flange and pipe section allows for a sturdy and strong ductwork and as such allows for a very reliable pipe transition through a partitioning wall. At the same time by proving a relatively large gasket retained by the flange and furthermore kept in place by the studs being threaded through the apertures (both in the gasket and flange) it is assured that the gasket is correctly placed with respect to the pipe section and the opening in the partitioning wall and that although being manipulated in order to fit the ductwork into the proper position relative to the apertures in the partitioning wall, the gasket remains in place and is able to fulfil its purpose, namely creating a substantially tight connection between the partitioning wall and the ductwork allowing the pipe to be led through the partitioning wall. Furthermore, the counter plate being provided with studs, which studs may be threaded through the apertures provided in the gasket and in the flange of the flange member, provides for easy assembly and a safe and very intuitive manner in which to assemble the three parts without welding or cutting.

Furthermore, by providing the counter plate with a non-circular cross-section such that a minor dimension is smaller than the opening in the partitioning wall, it is possible to insert the counter plate through the hole in the partitioning. Due to the counter plate having a major dimension across the counter plate in a direction, different from the minor direction, it is possible to manipulate the counter plate into a position on the other side of the partitioning wall, from which the flange member is to be arranged and as the major dimension being larger than the opening in the partitioning wall, assuring that the counter plate provides resistance when the flange member is mounted on the studs extending from the counter plate. One possible shape of the counter plate may be oval such that the major dimension is the largest dimension and the minor dimension is the smallest cross dimension in an oval shape counter plate. A further possible shape might be rectangular or any variation as long as the relationship between the minor dimension and the major dimension facilitates the above mechanisms, i.e. that it is possible to insert the counter plate through the aperture in the partitioning wall by arranging the counter plate with its minor dimension to pass through the apertures, thereafter assuring that the major dimension provides overlap on the other side of the partitioning wall whereby it becomes possible to tighten the flange member against the partitioning wall, such that the counter plate will provide the necessary resistance.

At the same time the apertures in the gasket and the flange member being positioned such that the studs from the counter plate may be threaded through apertures, assures that the gasket is retained in the correct position relative to the flange member such that a correct fit and mounting may be obtained.

The intermediate plate member is also provided with apertures such that the studs of the counter plate may be threaded through the intermediate plate member and thereby retained the intermediate plate member in a substantially fixed position with respect to the counter plate, the gasket and the flange member. In this manner the intermediate plate member may assist in stabilizing the gasket and thereby reinforcing the flange member as such, whereby a tight and stable fit is further improved by the provisioning of the intermediate plate member.

The intermediate plate member may in a further advantageous embodiment have an outer periphery defining a first shape, and where the gasket is provided with a substantially flat central region suitable to accommodate the first shape, and where the gasket outside the central region is provided with one or more concentrically arranged ridges circumscribing the central region, said ridges being raised relative to the flat central region.

In this embodiment of the intermediate plate member the intermediate plate member is active in positioning the gasket and at the same time the ridges provided in the gasket, for example extending above the gasket central area to such a degree that they also extends more than the thickness of the intermediate plate member, will in addition to retaining the gasket in its correct position with respect to the through going aperture in which the pipe through the partitioning wall is to be fit, also assures that the gasket does not buckle or fold. The intermediate plate thereby retains the gasket with its tightening function, when the flange member is fastened through a partitioning wall by means of the studs from the counter plate.

The intermediate plate member may also, in a further advantageous embodiment be provided on the side which use is intended to face away from the gasket, with a packaging or gasket material, which packaging or gasket material when exposed to fire will expand. In this manner the intermediate plate member also becomes an additional gasket having special properties for special situations. This is particularly advantageous when this type of ductwork is used in partitioning walls, for example in ships or other places where it might be difficult to gain access such that the additional protection against spread of fire will provide an extra barrier.

In a further advantageous embodiment the flange along an outer periphery is provided with a bent rim thereby forming an edge upstanding from the flange, where the inner dimension of the flange delimited by the bent rim can accommodate the gasket. In this manner a shallow dish shape suitable to accommodate the gasket is provided on the flange, whereby mounting of the gasket and retaining the gasket in its correct position is further facilitated.

When assembling the ductwork according to the present invention by manipulating the counter plate through the opening in the partitioning wall and threading the gasket and flange member over the studs extending from the counter plate, the ductwork may be tighten, for example by providing a thread on the studs and after having threaded the studs through the apertures of the intermediate plate the gasket and the flange member be tighten together by means of nuts. Also, other means of tightening may be used in order to urge the counter plate towards the flange member once the ductwork is installed around a hole and a partitioning wall.

The invention is also directed to a method of installing a ductwork as described above for creating a pipe transition through a partitioning wall, the method comprising the following steps:
a) creating a circular hole in the partitioning, where the hole in size corresponds to at least the outside diameter of the pipe which shall pass through the partitioning;
b) selecting ductwork having the desired pipe dimensions, corresponding to the pipe diameter which it is desired to pass through the partitioning;
c) manipulating the counter plate where the counter plate has a central aperture having a diameter larger than the inner diameter of the pipe section, and where the counter plate in a plane orthogonal to the aperture, has a non-circular cross-section, where a minor dimension across the counter plate is smaller than the opening in the partitioning wall, and a major dimension across the counter plate in a direction different from the minor dimension, is larger than the opening in the partitioning wall, and where one or more studs extends from a first surface of the counter plate, through the hole in the partitioning by inserting the counter plates minor dimension through the hole in the partitioning and arranging the studs so they extend through the hole;
c1) threading an intermediate plate member over the studs and pushed against the partitioning wall;
d) threading the apertures in the gasket over the studs;
e) threading the apertures in the flange of the flange member, over the studs;
f) providing means on the studs such that it is possible to urge the counter plate towards the flange member.

The method of course utilizes and enjoys the advantageous of the ductwork as already described above.

A further embodiment of the inventive method is described in the further claims.

The present invention is also directed to the use of the ductwork for leading at least one pipe through a circular opening in a partitioning wall, which use involves that the distance from the center of the central aperture to the one or more studs is smaller than the radius of the circular opening in the partitioning.

The present invention is also directed to the use of the ductwork for leading at least one pipe through a circular opening in a partitioning wall, which use alternatively involves that the minor dimension across the counter plate is smaller than the opening in the partitioning wall, and the major dimension is larger than the opening in the partitioning wall.

The present invention is also directed to the use of the method for leading at least one pipe through a circular opening in a partitioning wall, which use involves that the minor dimension across the counter plate is chosen smaller than the opening in the partitioning wall, and the major dimension is chosen larger than the opening in the partitioning wall.

### Description of the drawing

The invention will now be described with reference to the accompanying drawing, wherein
- Figure 1: illustrates a cross-section through a ductwork according to the present invention
- Figure 2: illustrates an exploded view of the ductwork
- Figure 3: illustrates the ductwork from the assembly side of the partitioning wall
- Figure 4: illustrates the assembly from the opposite side of the partitioning wall, i.e. the side of the partitioning wall which has not been accessed
- Figure 5: illustrates a cross-section through a bulkhead in which an assembly according to the invention has been installed.

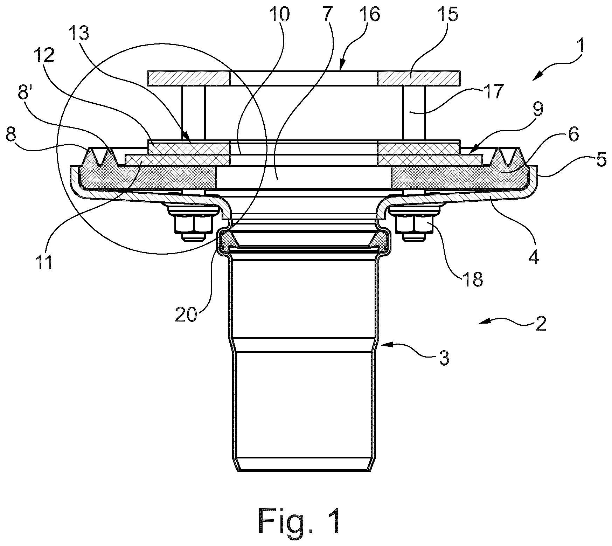

In Figure 1 is illustrated a cross-section through a ductwork according to the present invention. The ductwork 1 comprises a flange member 2, which flange member 2 comprises an integral pipe section 3. The pipe section 3 is in one end connected to a flange 4 which flange extends radially away from the pipe section 3. The flange section 4 is furthermore provided with a bent rim 5 such that the flange 4,5 is shaped like a shallow dish.

Inside the shallow dish delimited by the bent rim section 5 and the flange 4 is provided a resilient gasket 6. The gasket 6 fits inside the bent rim portion 5 such that the bent rim portion 5 will assist in guiding the gasket into a correct position. In this position a central aperture 7 provided in the gasket 6 will be superposed the opening in the pipe section 3. Furthermore, the gasket 6 is provided with upstanding ridge portions 8, 8' which are concentrically arranged with respect to the apertures 7 such that the ridge portions 8, 8' are equidistantly spaced from the rim section 5 of the flange 4.

The ductwork 1 is furthermore provided with an intermediate plate member 9 which intermediate plate member 9 is provided with a central aperture 10. The central aperture is positioned substantially centrally in the intermediate plate member 9 such that a continuous opening is provided through the aperture 10 of the intermediate plate member 9 and the aperture 7 in the gasket 6 and the pipe section 3.

In this embodiment the intermediate plate member 9 has an outer dimension such that it will fit inside the innermost ridge member 8' in the gasket, i.e. in a flat central section of the gasket. In this manner the intermediate plate member will help to stabilize the gasket such that, as the ductwork is installed in a partitioning wall (not illustrated) the intermediate plate member will make sure that the gasket is not displaced, folded or otherwise manipulated into a position which does not fulfil the gasket's function.

The intermediate plate member 9 is in this embodiment constructed as a triple member. The first part 13 may be a steel plate or other rigid member which may fulfil the function as described above by keeping the gasket 6 in its correct position. The upper layer 12 is an intumescent (fire protective) layer which will expand when exposed to heat, for example a fire. A secondary fire protective layer 11 is a fire impregnated foam, for example a polyurethane foam. In this case the layer 12 will expend and cover any irregularities in the fit between the ductwork of the present invention and the partitioning wall to which it is mounted. For example a steel partitioning wall may deform when exposed to fire, and by providing the fire protective expansive layer, it will to a certain degree be possible to maintain the tight fit even with considerable deformation of the partitioning wall. The first layer may have a thickness of 4 mm whereas the second layer is approx. 10 mm.

Examples of suitable intumescent material may be obtained as Envirograf^{®} Multigraf, but also other makes are useful.

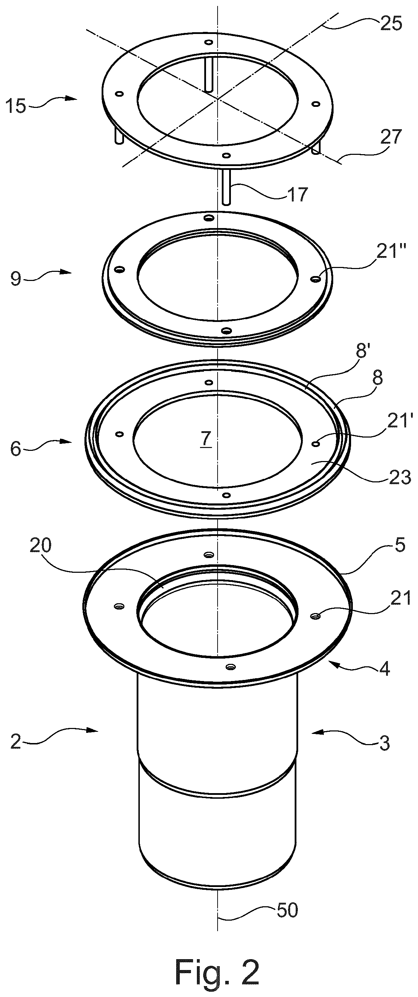

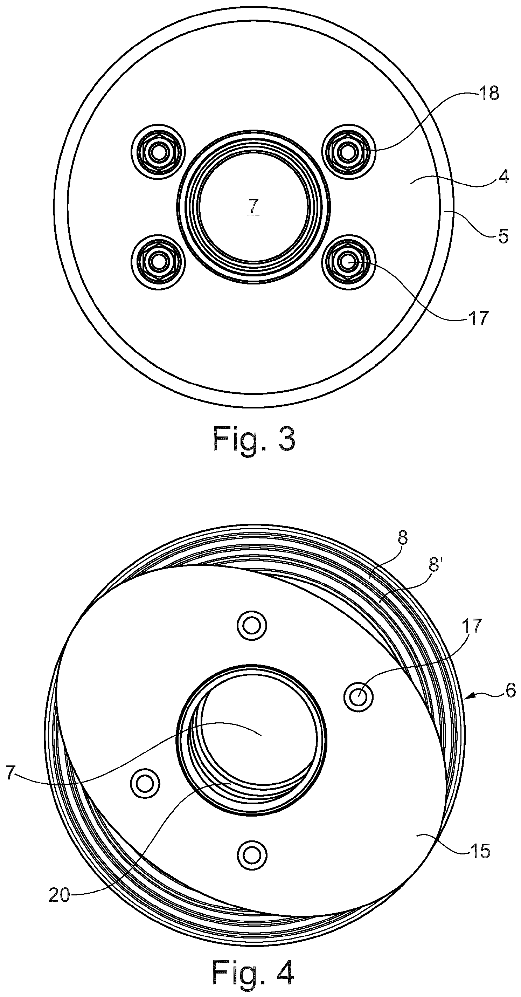

Finally, the ductwork as illustrated in Figure 1 comprises a counter plate 15. The counter plate is as will be explained with reference to Figures 2 and 3 in this embodiment shaped with an oval cross-section orthogonal to the aperture 16 provided in the counter plate. Furthermore, the counter plate is provided with a number of studs 17. These studs extend substantially perpendicular from the plane of the counter plate 15. Furthermore, the intermediate plate 9, the gasket 6 and the flange 4 are all provided with apertures which may be superposed such that the studs may be inserted through the overlapping apertures in the intermediate plate 9, the gasket 6 and the flange 4 such that the studs on the free side of the flange 4 may be provided with nuts 18. In the embodiment described with reference to the Figures, the counter plate 15 is provided with four studs 17 arranged perpendicular to the counter plate. Naturally, any suitable number of studs may be arranged, for example 3, 5 or more depending on the size of the ductwork and the necessity to assure that the counter plate 15 is able to provide sufficient pressure to the ductwork around the partitioning wall in order to create a watertight connection.

Also, more than one pipe section may be provided extending from the flange. The skilled person will realise to arrange the inventive features accordingly in order to realise the invention with more pipe sections. This will naturally require a gasket with apertures, an intermediate plate with more apertures etc. The counter plate shall naturally retain its properties relating to major and minor axis, but otherwise be designed to accommodate the plurality of pipe sections.

The ductwork is illustrated in an exploded view in Figure 2 where the same parts of the ductwork are provided with the same reference numbers. The pipe section 2 is provided with a circular pipe 3 connected to the flange 4. In order to assure a tight connection with the pipe to be inserted into the pipe section, an internal gasket 20 is provided, in this embodiment in the zone where the flange 4 interfaces the pipe section 3. Furthermore, the flange 4 is provided with four apertures 21 which have a size and are distributed such that it will be able to receive the studs 17 from the counter plate 15. Likewise, the gasket 6 is provided with apertures 21' as is the intermediate plate member with apertures 21''. In this manner once the gasket 6 is positioned on the flange 4 inside the bent rim portion 5 and the intermediate plate member 9 is arranged on the gasket 6 it is possible to insert the studs 17 through the overlapping second apertures 21, 21', 21" and in this manner access the distal ends of the studs 17 from underneath the flange 4 (in the orientation illustrated in the fig).

In order to accommodate the intermediate plate member 9, the gasket is provided with a flat central region 23 which extends from the first aperture 7 provided in the gasket towards ridge members 8 arranged concentrically around the aperture 7. This flat central region 23 is provided in order to accommodate the intermediate plate member 9 such that a flat and tight fit will be provided between the intermediate plate member 9 when arranged inside the central flat section 23 of the gasket 6. For this reason the flat section 23 has a radial extend sufficient to accommodate the intermediate plate member 9.

The counter plate is provided with an oval cross-section in a plane perpendicular to a central axis 50 through the ductwork. The oval shape is defined by a minor axis 25 and a major axis 27.

When arranging the ductwork around a circular aperture in a partitioning wall the circular opening in the partitioning wall shall have a diameter corresponding to the dimension of the counter plate along the minor axis 25. In this manner it is possible to manipulate the counter plate 15 through the opening in the partitioning wall and then when flattening the counter plate 15 against the surface of the partitioning wall (on the opposite side to where the work is carried out from), the dimension of the counter plate 15 along the major axis 27 is larger than the diameter of the aperture in the partitioning wall such that the counter plate may be tighten against the partitioning wall due to the overlap of the counter plate along the major axis 27.

When mounting the ductwork according to the present invention the counter plate 15 is initially arranged as described above on one side of the partitioning wall. Once the counter plate 15 is arranged, the studs 17 will extend through the aperture in the partitioning wall after which the intermediate plate member 9 is threaded onto the studs followed by the gasket and the pipe section 2 (with the flange). Once these members are in place the distal ends of the studs 17 will extend on the rear side of the flange 4. At this time it is possible to thread nuts (see Figure 1) onto the distal ends of the studs and by tightening the nuts compressing the ductwork around the aperture in the partitioning wall.

At this time the ductwork according to the present invention will, from the assembly side of the partitioning wall, look like the illustration in Figure 3.

From the opposite side of the partitioning wall, i.e. the side of the partitioning wall which has not been accessed, the assembly will look like the illustration in Figure 4. In this illustration the partitioning wall is invisible. The counter plate 15 with the oval shape with fastening means for the studs 17 as well as the aperture 7 going through the partitioning wall and potentially the gasket 20 inside the pipe section 3 will be visible inside the aperture 7. The gasket 6 will be hidden by the partitioning wall, but for illustrative purposes the partitioning wall has been made invisible such that it is possible to view the gasket and the concentrically arranged ridges 8, 8'.

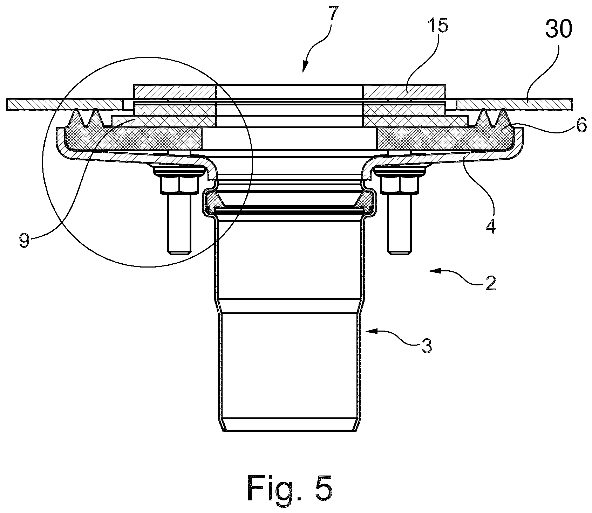

In fig 5 is illustrated a cross-section through a bulkhead wherein an assembly according to the invention is mounted. The parts of the assembly/ductwork are identified by the same reference numbers as used above.

As appears from the description above the counter plate 15 is oval having specific dimensions relative to the aperture in the bulkhead or partitioning 30 in which the ductwork is to be installed. After having been manipulated into place the counter plate will be positioned such that a portion of the counter plate will overlay the bulkhead 30. In the illustration in fig. 5, the counter plate 15 is illustrated in a cross section along the shorter axis 25 (see fig. 2) - therefore the counter plate does not overlap the bulkhead, as would be the case had the cross-section been made along the longer axis 27 (see fig 2 again).

By further tightening the nuts 18 on the studs 17, the counter plate is forced against the bulkhead 30 and at the same time the gasket 6 is also forced against the bulkhead - thereby creating a tight transition of ductwork through a bulkhead/partitioning.

Above a particular embodiment of the invention has been described; however, it will be clear to a person skilled in the art that many variations of the invention are possible, as long as they fall within the scope of the appended claims. For example, the number of ridges provided in the gasket may be more or less as well as the number of studs projecting from the counter plate 15 may also be any suitable number. A further aspect which should also be clear to a person skilled in the art is that the thickness and resiliency of the gasket 6 shall be chosen according to circumstances.

Although the intermediate plate member has been described above, it is clear that in some embodiments not covered by the subject-matter of the claims, it may be advantageous not to have an intermediate plate member.

In other embodiments, particularly where the requirements are such that the risk of fire spreading should be avoided, an intermediate member with a fire gasket compound should be used.

In some embodiments of the invention the complete and assembled ductwork is delivered to the personnel who shall have to install the ductwork in-situ. This of cause has the great advantage that the installer does not have to keep track of the parts of the ductwork, does not risk assembling the various parts incorrectly etc. Furthermore due to the inventive geometrical relationship of the counter plate with respect to the opening in the bulkhead, it is not necessary to disassemble the ductwork, and all operations may be performed from one side of the ductwork.

Also, it is contemplated that the studs may be in the shape of bolts. In those embodiments the counter plate is either provided with means for hindering the bolt heads to rotate during the mounting procedure, or it is necessary to have access to both sides of the bulkhead.

## Claims

1. Ductwork for leading at least one pipe through a circular opening in a partitioning wall, the ductwork includes:
- a flange member (2), where said flange member has a pipe section (3) with an inner diameter, wherein connected to the pipe section adjacent one end of said pipe is arranged a flange (4), said flange extending radially away from said pipe section (3) in a plane substantially orthogonal to a longitudinal direction of the pipe section, and where one or more apertures (21) are provided through said flange (4);
- a gasket (6) dimensioned to be positioned on said flange, where a first aperture (7) is arranged centrally in said gasket, said aperture (7) having a diameter larger than the inner diameter in the pipe section (3), and in use arranged on the flange such that the aperture is superposed the pipe section, and where further one or more second apertures (21') are provided through the gasket (6), such that in use the one or more second apertures (21') may be aligned/superposed with the one or more apertures (21) in the flange (4);
- a counter plate (15), which in use is to be positioned on the opposite side of the partitioning as to the flange member (2) and the gasket (6), where the counter plate (15) has a central aperture (16), and where the counter plate (15) in a plane orthogonal to the aperture (16), has a non-circular cross-section, having a minor dimension across the counter plate and a major dimension across the counter plate in a direction different from the minor dimension, and where one or more studs (17) extends from a first surface of the counter plate (15), such that the one or more studs may be inserted through the one or more second apertures (21') in the gasket (6) and the one or more apertures (21) in the flange (4) of the flange member, wherein an intermediate plate member (9) is provided, said intermediate plate member (9) being provided with one or more apertures (21"), said apertures (21") arranged such that the one or more studs (17) in the counter plate (15) may pass through the one or more apertures (21"), wherein in use, the intermediate plate member (9) is arranged on said gasket (6).

2. Ductwork according to claim 1 wherein the intermediate plate member (9) has an outer periphery defining a first shape, and where the gasket (6) is provided with a substantially flat central region (23) suitable to accommodate the first shape, and where the gasket (6) outside the central region is provided with one or more concentrically arranged ridges (8,8') circumscribing the central region, said ridges (8,8') being raised relative to the flat central region (23).

3. Ductwork according to claim 1 wherein the intermediate plate member (9) on the side in use intended to face away from the gasket (6) is provided with a packaging or gasket material (11,12), which packaging or gasket material when exposed to fire will expand, where optionally the packaging or gasket material (11,12) expanding when exposed to fire comprises two different materials, a first passive foam material (11) and a second active expanding material (12), said materials provided with a shielding steel plate (13).

4. Ductwork according to claim 1 wherein the flange (4) along an outer periphery is provided with a bent rim (5) thereby forming an edge upstanding from the flange (4), where the inner dimension of the flange delimited by the bent rim can accommodate the gasket.

5. Ductwork according to claim 1 wherein the studs (17) in a free distal end is provided with a thread suitable to thread a nut (18) on.

6. Method of installing a ductwork according to any of claims 1 to 5 for creating a pipe transition through a partitioning wall, the method comprising the following steps:
a) creating a circular opening in the partitioning, where the hole in size corresponds to at least the outside diameter of the pipe which shall pass through the partitioning;
b) selecting ductwork according to any of claims 1 to 5 having the desired pipe dimensions, corresponding to the pipe diameter which it is desired to pass through the partitioning;
c) manipulating the counter plate (15) where the counter plate has a central aperture (16) having a diameter larger than the inner diameter of the pipe section (3), and where the counter plate in a plane orthogonal to the aperture, has a non-circular cross-section, where a minor dimension across the counter plate is smaller than the opening in the partitioning wall, and a major dimension across the counter plate in a direction different from the minor dimension, is larger than the opening in the partitioning wall, and where one or more studs (17) extends from a first surface of the counter plate (15), through the hole in the partitioning by inserting the counter plates minor dimension through the hole in the partitioning and arranging the studs so they extend through the hole;
c1) threading an intermediate plate member (9) over the studs (17) and pushed against the partitioning wall;
d) threading the apertures (21') in the gasket (6) over the studs (17);
e) threading the apertures (21) in the flange (4) of the flange member (2), over the studs (17);
f) providing means (18) on the studs (17) such that it is possible to urge the counter plate (15) towards the flange member (2).

7. Method according to claim 6, where the studs (17) are provided with a thread and where the means for urging the counter plate towards the flange member is nuts (18) and optionally washers threadedly arranged on the studs.

8. Use of a ductwork according to any of claims 1 to 5 for leading at least one pipe through a circular opening in a partitioning wall, where the distance from the center of the central aperture of the counter plate to the one or more studs is smaller than the radius of the circular opening in the partitioning.

9. Use of a ductwork according to any of claims 1 to 5 for leading at least one pipe through a circular opening in a partitioning wall, where the minor dimension across the counter plate is smaller than the opening in the partitioning wall, and the major dimension is larger than the opening in the partitioning wall.

10. Use of a method according to claim 6 or 7 for leading at least one pipe through a circular opening in a partitioning wall, where the minor dimension across the counter plate is chosen smaller than the opening in the partitioning wall, and the major dimension is chosen larger than the opening in the partitioning wall.

## Patentansprüche

1. Leitungssystem zum Durchführen mindestens eines Rohres durch eine kreisförmige Öffnung in einer Trennwand hindurch, wobei das Leitungssystem Folgendes beinhaltet:
- ein Flanschelement (2), wobei das Flanschelement einen Rohrabschnitt (3) mit einem Innendurchmesser aufweist, wobei ein Flansch (4) verbunden mit dem Rohrabschnitt benachbart zu einem Ende des Rohres angeordnet ist, wobei sich der Flansch radial weg vom Rohrabschnitt (3) in einer Ebene im Wesentlichen orthogonal zu einer Längsrichtung des Rohrabschnittes erstreckt, und wobei eine oder mehrere Öffnungen (21) durch den Flansch (4) hindurch bereitgestellt sind;
- eine Dichtung (6), die dazu dimensioniert ist, auf dem Flansch positioniert zu sein, wobei eine erste Öffnung (7) mittig in der Dichtung angeordnet ist, wobei die Öffnung (7) einen Durchmesser aufweist, der größer ist als der Innendurchmesser im Rohrabschnitt (3), und im Gebrauch derart auf dem Flansch angeordnet ist, dass die Öffnung den Rohrabschnitt überlagert, und wobei ferner eine oder mehrere zweite Öffnungen (21') durch die Dichtung (6) hindurch derart bereitgestellt sind, dass im Gebrauch die eine oder mehreren zweiten Öffnungen (21') mit der einen oder den mehreren Öffnungen (21) im Flansch (4) ausgerichtet/überlagert sein können;
- eine Gegenplatte (15), die im Gebrauch auf der dem Flanschelement (2) und der Dichtung (6) gegenüberliegenden Seite der Trennung zu positionieren ist, wobei die Gegenplatte (15) eine mittige Öffnung (16) aufweist, und wobei die Gegenplatte (15) in einer zur Öffnung (16) orthogonalen Ebene einen nicht kreisförmigen Querschnitt aufweist, der eine kleinere Abmessung über die Gegenplatte und eine größere Abmessung über die Gegenplatte in einer Richtung aufweist, die sich von der kleineren Abmessung unterscheidet, und wobei sich ein oder mehrere Bolzen (17) von einer ersten Oberfläche der Gegenplatte (15) derart erstrecken, dass der eine oder die mehreren Bolzen durch die eine oder die mehreren zweiten Öffnungen (21') in der Dichtung (6) und die eine oder die mehreren Öffnungen (21) in dem Flansch (4) des Flanschelements hindurch eingeführt werden können, wobei ein Zwischenplattenelement (9) bereitgestellt ist, wobei das Zwischenplattenelement (9) mit einer oder mehreren Öffnungen (21") bereitgestellt ist, wobei die Öffnungen (21") derart angeordnet sind, dass der eine oder die mehreren Bolzen (17) in der Gegenplatte (15) durch die eine oder die mehreren Öffnungen (21") hindurchgehen können, wobei das Zwischenplattenelement (9) im Gebrauch auf der Dichtung (6) angeordnet ist.

2. Leitungssystem nach Anspruch 1, wobei das Zwischenplattenelement (9) einen Außenumfang aufweist, der eine erste Form definiert, und wobei die Dichtung (6) mit einem im Wesentlichen flachen Mittelbereich (23) bereitgestellt ist, der geeignet ist, die erste Form aufzunehmen, und wobei die Dichtung (6) außerhalb des Mittelbereichs mit einer oder mehreren konzentrisch angeordneten Rippen (8, 8') bereitgestellt ist, die den Mittelbereich umschreiben, wobei die Rippen (8, 8') relativ zum flachen Mittelbereich (23) erhöht sind.

3. Leitungssystem nach Anspruch 1, wobei das Zwischenplattenelement (9) auf der Seite, die im Gebrauch von der Dichtung (6) abgewandt sein soll, mit einem Verpackungs- oder Dichtungsmaterial (11, 12) bereitgestellt ist, wobei sich das Verpackungs- oder Dichtungsmaterial, wenn es Feuer ausgesetzt wird, ausdehnt, wobei optional das Verpackungs- oder Dichtungsmaterial (11, 12), das sich ausdehnt, wenn es Feuer ausgesetzt wird, zwei verschiedene Materialien umfasst, ein erstes passives Schaummaterial (11) und ein zweites aktives, sich ausdehnendes Material (12), wobei die Materialien mit einer abschirmenden Stahlplatte (13) bereitgestellt sind.

4. Leitungssystem nach Anspruch 1, wobei der Flansch (4) entlang eines Außenumfangs mit einem gebogenen Rand (5) bereitgestellt ist, wodurch eine vom Flansch (4) aufragende Kante gebildet wird, wobei die Innenabmessung des Flansches, die durch den gebogenen Rand begrenzt wird, die Dichtung aufnehmen kann.

5. Leitungssystem nach Anspruch 1, wobei die Bolzen (17) an einem freien distalen Ende mit einem Gewinde bereitgestellt sind, auf das eine Mutter (18) aufgeschraubt werden kann.

6. Verfahren zum Installieren eines Leitungssystems nach einem der Ansprüche 1 bis 5 zum Erzeugen eines Rohrübergangs durch eine Trennwand hindurch, wobei das Verfahren die folgenden Schritte umfasst:
a) Erzeugen einer kreisförmigen Öffnung in der Trennung, wobei die Größe des Lochs mindestens dem Außendurchmesser des Rohres entspricht, das durch die Trennung hindurchgehen soll;
b) Auswählen des Leitungssystems nach einem der Ansprüche 1 bis 5, das die gewünschten Rohrabmessungen aufweist, die dem Rohrdurchmesser entsprechen, von dem gewünscht wird, dass er durch die Trennung hindurchgeht;
c) Manipulieren der Gegenplatte (15), wobei die Gegenplatte eine mittige Öffnung (16) aufweist, die einen Durchmesser aufweist, der größer ist als der Innendurchmesser des Rohrabschnitts (3), und wobei die Gegenplatte in einer Ebene orthogonal zur Öffnung einen nicht kreisförmigen Querschnitt aufweist, wobei eine kleinere Abmessung über die Gegenplatte kleiner ist als die Öffnung in der Trennwand und eine größere Abmessung über die Gegenplatte in einer Richtung, die sich von der kleineren Abmessung unterscheidet, größer ist als die Öffnung in der Trennwand, und wobei sich ein oder mehrere Bolzen (17) von einer ersten Oberfläche der Gegenplatte (15) durch das Loch in der Trennung hindurch erstrecken, indem die kleinere Abmessung der Gegenplatte durch das Loch in der Trennung hindurch eingeführt wird und die Bolzen so angeordnet werden, dass sie sich durch das Loch hindurch erstrecken;
c1) Führen eines Zwischenplattenelements (9) über die Bolzen (17), das gegen die Trennwand gedrückt wird;
d) Führen der Öffnungen (21') in der Dichtung (6) über die Bolzen (17);
e) Führen der Öffnungen (21) im Flansch (4) des Flanschelements (2) über die Bolzen (17);
f) Bereitstellen von Mitteln (18) auf den Bolzen (17) derart, dass es möglich ist, die Gegenplatte (15) in Richtung des Flanschelements (2) anzudrücken.

7. Verfahren nach Anspruch 6, wobei die Bolzen (17) mit einem Gewinde bereitgestellt sind und wobei die Mittel zum Andrücken der Gegenplatte in Richtung des Flanschelements Muttern (18) und optional Unterlegscheiben sind, die aufgeschraubt auf den Bolzen angeordnet sind.

8. Verwenden eines Leitungssystems nach einem der Ansprüche 1 bis 5 zum Durchführen mindestens eines Rohres durch eine kreisförmige Öffnung in einer Trennwand hindurch, wobei der Abstand von der Mitte der mittigen Öffnung der Gegenplatte zu dem einen oder den mehreren Bolzen kleiner ist als der Radius der kreisförmigen Öffnung in der Trennung.

9. Verwenden eines Leitungssystems nach einem der Ansprüche 1 bis 5 zum Durchführen mindestens eines Rohres durch eine kreisförmige Öffnung in einer Trennwand hindurch, wobei die kleinere Abmessung über die Gegenplatte kleiner ist als die Öffnung in der Trennwand und die größere Abmessung größer ist als die Öffnung in der Trennwand.

10. Verwenden eines Verfahrens nach Anspruch 6 oder 7 zum Durchführen mindestens eines Rohres durch eine kreisförmige Öffnung in einer Trennwand hindurch, wobei die kleinere Abmessung über die Gegenplatte kleiner gewählt ist als die Öffnung in der Trennwand und die größere Abmessung größer gewählt ist als die Öffnung in der Trennwand.

## Revendications

1. Système de gaines permettant d'acheminer au moins un tuyau à travers une ouverture circulaire dans une paroi de séparation, le système de gaines comprenant :
- un élément de bride (2), dans lequel ledit élément de bride présente une section de tuyau (3) avec un diamètre intérieur, dans lequel, reliée à la section de tuyau adjacente à une extrémité dudit tuyau, est disposée une bride (4), ladite bride s'étendant radialement à l'opposé de ladite section de tuyau (3) dans un plan sensiblement orthogonal à une direction longitudinale de la section de tuyau, et dans lequel un ou plusieurs orifices (21) sont prévus à travers ladite bride (4) ;
- un joint (6) dimensionné pour être positionné sur ladite bride, dans lequel un premier orifice (7) est disposé au centre dans ledit joint, ledit orifice (7) présentant un diamètre supérieur au diamètre intérieur dans la section de tuyau (3), et en utilisation, disposé sur la bride de telle sorte que l'orifice soit superposé à la section de tuyau, et dans lequel un ou plusieurs seconds orifices (21') sont en outre prévus à travers le joint (6), de sorte que, en utilisation, le ou les seconds orifices (21') peuvent être alignés avec/superposés au ou aux orifices (21) dans la bride (4) ;
- une contre-plaque (15) qui, en utilisation, doit être positionnée du côté opposé de la séparation par rapport à l'élément de bride (2) et au joint (6), dans lequel la contre-plaque (15) présente un orifice (16) central, et dans lequel, la contre-plaque (15), dans un plan orthogonal à l'orifice (16), présente une section transversale non circulaire, qui présente une petite dimension à travers la contre-plaque et une grande dimension à travers la contre-plaque dans une direction différente de la petite dimension, et dans lequel un ou plusieurs goujons (17) s'étendent à partir d'une première surface de la contre-plaque (15), de sorte que le ou les goujons puissent être insérés à travers le ou les seconds orifices (21') dans le joint (6) et le ou les orifices (21) dans la bride (4) de l'élément de bride, dans lequel un élément de plaque intermédiaire (9) est prévu, ledit élément de plaque intermédiaire (9) étant pourvu d'un ou plusieurs orifices (21"), lesdites orifices (21") étant disposés de telle sorte que le ou les goujons (17) dans la contre-plaque (15) puissent passer à travers le ou les orifices (21"), dans lequel, en utilisation, l'élément de plaque intermédiaire (9) est disposé sur ledit joint (6).

2. Système de gaines selon la revendication 1, dans lequel l'élément de plaque intermédiaire (9) présente une périphérie externe définissant une première forme, et dans lequel le joint (6) est pourvu d'une région centrale (23) sensiblement plate adaptée pour loger la première forme, et dans lequel le joint (6) à l'extérieur de la région centrale est pourvu d'une ou plusieurs crêtes (8, 8') disposées concentriquement qui entourent la région centrale, lesdites crêtes (8, 8') étant surélevées par rapport à la région centrale (23) plate.

3. Système de gaines selon la revendication 1, dans lequel l'élément de plaque intermédiaire (9) sur le côté, destiné à être opposé au joint (6) en utilisation, est pourvu d'un matériau d'emballage ou de joint (11, 12), le matériau d'emballage ou de joint se dilate lorsqu'il est exposé au feu, optionnellement, dans lequel le matériau d'emballage ou de joint (11, 12) qui se dilate lorsqu'il est exposé au feu comprend deux matériaux différents : un premier matériau en mousse passif (11) et un second matériau expansible actif (12), lesdits matériaux étant pourvus d'une plaque d'acier de protection (13).

4. Système de gaines selon la revendication 1, dans lequel la bride (4), le long d'une périphérie externe, est pourvue d'un rebord courbé (5), ce qui permet de former un bord saillant de la bride (4), dans lequel la dimension interne de la bride délimitée par le rebord courbé peut loger le joint.

5. Système de gaines selon la revendication 1, dans lequel les goujons (17) dans une extrémité distale libre sont pourvus d'un filetage adapté pour enfiler un écrou (18).

6. Procédé d'installation d'un système de gaines selon l'une quelconque des revendications 1 à 5, destiné à créer une transition de tuyau à travers une paroi de séparation, le procédé comprenant les étapes suivantes consistant à :
a) créer une ouverture circulaire dans la séparation, dans lequel le trou présente une taille correspondant au moins au diamètre extérieur du tuyau qui doit passer à travers la séparation ;
b) sélectionner un système de gaines selon l'une quelconque des revendications 1 à 5 présentant les dimensions de tuyau souhaitées, correspondant au diamètre de tuyau que l'on souhaite faire passer à travers la séparation ;
c) manipuler la contre-plaque (15), dans lequel la contre-plaque présente un orifice (16) central présentant un diamètre plus grand que le diamètre intérieur de la section de tuyau (3), et dans lequel, la contre-plaque, dans un plan orthogonal à l'orifice, présente une section transversale non circulaire, dans lequel une petite dimension à travers la contre-plaque est plus petite que l'ouverture dans la paroi de séparation, et une grande dimension à travers la contre-plaque dans une direction différente de la petite dimension est plus grande que l'ouverture dans la paroi de séparation, et dans lequel un ou plusieurs goujons (17) s'étendent à partir d'une première surface de la contre-plaque (15), à travers le trou dans la séparation en insérant la petite dimension de contre-plaques à travers le trou dans la séparation et en disposant les goujons de sorte qu'ils s'étendent à travers le trou ;
c1) enfiler un élément de plaque intermédiaire (9) au-dessus des goujons (17) et pousser contre la paroi de séparation ;
d) enfiler les orifices (21') dans le joint (6) au-dessus des goujons (17) ;
e) enfiler les orifices (21) dans la bride (4) de l'élément de bride (2), au-dessus des goujons (17) ;
f) fournir des moyens (18) sur les goujons (17) de sorte qu'ils soient possibles de pousser la contre-plaque (15) vers l'élément de bride (2).

7. Procédé selon la revendication 6, dans lequel les goujons (17) sont pourvus d'un filetage et dans lequel les moyens destinés à pousser la contre-plaque vers l'élément de bride sont des écrous (18) et optionnellement des rondelles disposées par filetage sur les goujons.

8. Utilisation d'un système de gaines selon l'une quelconque des revendications 1 à 5 pour acheminer au moins un tuyau à travers une ouverture circulaire dans une paroi de séparation, dans laquelle la distance entre le centre de l'orifice central de la contre-plaque et le ou les goujons est inférieure au rayon de l'ouverture circulaire dans la séparation.

9. Utilisation d'un système de gaines selon l'une quelconque des revendications 1 à 5 pour acheminer au moins un tuyau à travers une ouverture circulaire dans une paroi de séparation, dans laquelle la petite dimension à travers la contre-plaque est plus petite que l'ouverture dans la paroi de séparation, et la grande dimension à travers la contre-plaque est plus grande que l'ouverture dans la paroi de séparation.

10. Utilisation d'un procédé de gaines selon la revendication 6 ou 7 pour acheminer au moins un tuyau à travers une ouverture circulaire dans une paroi de séparation, dans laquelle la petite dimension à travers la contre-plaque est choisie plus petite que l'ouverture dans la paroi de séparation, et la grande dimension à travers la contre-plaque est choisie plus grande que l'ouverture dans la paroi de séparation.
